# EUROPÄISCHE PATENTSCHRIFT

(11) **EP 1 430 689 B1**
(45) Veröffentlichungstag und Bekanntmachung des Hinweises auf die Patenterteilung: **23.03.2005**
(21) Anmeldenummer: 02774351.7
(22) Anmeldetag: 13.09.2002
(51) Int. Cl.: H04L 29/06, H04L 12/28

(54) **EMPFANG VON DATENTELEGRAMMEN IN KOMMUNIKATIONSSYSTEMEN MIT REDUNDANTEN NETZWERKPFADEN**
RECEIPT OF DATA MESSAGES IN COMMUNICATIONS SYSTEMS COMPRISING REDUNDANT NETWORK PATHS
RECEPTION DE TELEGRAMMES DE DONNEES DANS DES SYSTEMES DE COMMUNICATION A VOIES DE RESEAU REDONDANTES

(30) Priorität: 26.09.2001 DE 10147428; 26.07.2002 DE 10234149
(43) Veröffentlichungstag der Anmeldung: 23.06.2004
(73) Patentinhaber: SIEMENS AKTIENGESELLSCHAFT, 80333 München (DE)
(72) Erfinder: ARNOLD, Johann, 90530 Wendelstein (DE); BRÜCKNER, Dieter, 96199 Zapfendorf (DE); GÖTZ, Franz-Josef, 91180 Heideck (DE); KLOTZ, Dieter, 90768 Fürth (DE); SCHIMMER, Jürgen, 90473 Nürnberg (DE)
(86) Internationale Anmeldenummer: PCT/DE2002/003430
(87) Internationale Veröffentlichungsnummer: WO 2003/028336

(56) Entgegenhaltungen:
- EP-A- 0 384 936
- EP-A- 0 507 022
- WO-A-00/13376
- GERSTEL O ET AL: "Combined WDM and SONET network design" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21. März 1999 (1999-03-21), Seiten 734-743, XP010323812 ISBN: 0-7803-5417-6

## Beschreibung

Die Erfindung betrifft ein Verfahren zum Empfang von Datentelegrammen in Kommunikationssystemen mit redundanten Netzwerkpfaden.

Datennetze werden aus vernetzten Datennetzknoten gebildet und ermöglichen die Kommunikation zwischen mehreren Teilnehmern. Kommunikation bedeutet dabei die Übertragung von Daten zwischen den Teilnehmern. Die zu übertragenden Daten werden dabei als Datentelegramme verschickt, das heißt, die Daten werden zu einem oder mehreren Paketen zusammengepackt und in dieser Form über das Datennetz an den entsprechenden Empfänger gesendet. Man spricht deshalb auch von Datenpaketen. Der Begriff Übertragung von Daten wird dabei im Weiteren synonym zur oben erwähnten Übertragung von Datentelegrammen oder Datenpaketen verwendet.

Zur Vernetzung werden beispielsweise bei schaltbaren Hochleistungsdatennetzen, insbesondere Ethernet, die Teilnehmer untereinander über Koppelknoten verbunden. Jeder Koppelknoten kann mit mehr als zwei Teilnehmern verbunden sein und auch selbst Teilnehmer sein. Teilnehmer sind beispielsweise Computer, speicherprogrammierbare Steuerungen (SPS) oder andere Maschinen, die elektronische Daten mit anderen Maschinen austauschen, insbesondere verarbeiten.

In verteilten Automatisierungssystemen, beispielsweise im Bereich Antriebstechnik, müssen bestimmte Daten zu bestimmten Zeiten bei bestimmten Teilnehmern eintreffen und von den Empfängern verarbeitet werden. Man spricht dabei von echtzeitkritischen Daten bzw. echtzeitkritischem Datenverkehr, da ein nicht rechtzeitiges Eintreffen der Daten am Bestimmungsort zu unerwünschten Resultaten beim Teilnehmer führt.

Zum Stand der Technik gehört das Versenden von Duplikaten über redundante Wege um die Wahrscheinlichkeit des Empfangs mindestens eines Paketes im Falle einer Störung zu erhöhen. Die Empfangsvorrichtung erkennt Duplikate anhand der Paketkennungen, z.B. von Sequenznummern. Ein solches Verfahren ist aus WO 00/13376 bekannt.

Ebenso ist aus dem Stand der Technik die Verwendung eines synchronen, getakteten Kommunikationssystems mit Äquidistanz-Eigenschaften (isochrones Kommunikationssystem) in einem Automatisierungssystem bekannt. Hierunter versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen (Isochronzyklen), die durch den vom System verwendeten Kommunikationstakt vorgegeben werden. Teilnehmer sind beispielsweise zentrale Automatisierungsgeräte, z. B. speicherprogrammierbare Steuerungen (-SPS, Bewegungssteuerungen-) oder andere Kontrolleinheiten, Computer, oder Maschinen, die elektronische Daten mit anderen Maschinen austauschen, insbesondere Daten von anderen Maschinen verarbeiten, und Peripheriegeräte wie z.B. Ein-/ Ausgabe-Baugruppen, Antriebe, Aktoren, Sensoren. Unter Kontrolleinheiten werden im folgenden Regler- oder Steuerungseinheiten jeglicher Art verstanden. Zur Datenübertragung werden beispielsweise Kommunikationssysteme wie z.B. Feldbus, Profibus, Ethernet, Industrial Ethernet, FireWire oder auch PC-interne Bussysteme (PCI), etc. verwendet.

Bei der Echtzeitkommunikation handelt es sich um eine geplante Kommunikation. Datentelegramme werden dabei von einem Teilnehmer zu einem fest vorgegebenen Sendezeitpunkt über vorgegebene Ports weitergeleitet. Ein Empfangsknoten erwartet ebenfalls Echtzeitdatenpakete zu einem bestimmten Zeitpunkt an einem bestimmten Port. Durch die Planung der isochronen Echtzeitkommunikation ist deshalb der Pfad, den das Echtzeittelegramm im Netzwerk nimmt, genau festgelegt. Während eines Kommunikationszyklus wird das komplette Peripherieabbild in einem Knoten ausgetauscht. Das Peripherieabbild umfasst alle echtzeitkritischen Daten, welche von einem Teilnehmer versandt, empfangen und in einem bestimmten Adressbereich eines Speichers abgelegt werden. Der gesamte Adressbereich wird während eines Zyklus überschrieben.

Automatisierungskomponenten (z.B. Steuerungen, Antriebe,...) verfügen heute oftmals über eine Schnittstelle zu einem zyklisch getakteten Kommunikationssystem. Eine Ablaufebene der Automatisierungskomponente (Fast-cycle) (z.B. Lageregelung in einer Steuerung, Drehzahl- und Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Bei der Echtzeitkommunikation in einem isochronen Real-Time-Fast-Ethernet (IRTE) gibt es im Isochronzyklus einen IRT-Zeitbereich (IRT-Z.) und einen NRT-Zeitbereich (NRT-Z., Non Real-Time). Im IRT-Zeitbereich findet der zyklische Austausch von Echtzeitdaten statt, während im NRT-Zeitbereich über Standard-Ethernet-Kommunikation kommuniziert wird. Der NRT-Zeitbereich ist besonders geeignet zur Übertagung von Daten von niederperformanten Algorithmen. Diese müssen dann nicht während eines jeden Isochronzyklus übertragen werden. Der Datenverkehr kann somit verringert werden. Ein solches Datennetz ist aus der DE 100 58 524 bekannt.

Bei der Standard-Ethernet-Kommunikation dürfen Datennetze jedoch redundante Netzwerkpfade bzw. geschlossenen Ringe aufweisen. Diese müssen an einer Stelle aufgebrochen sein, beispielsweise mit Hilfe des Spanning-Tree-Algorithmus, da sonst kreisende Datentelegramme auftreten können. Dabei bleibt die Topologie erhalten, jedoch werden ein Sendeport und ein Empfangsport zweier benachbarter Knoten abgeschaltet, um einen redundanten Netzwerkpfad zu eliminieren .

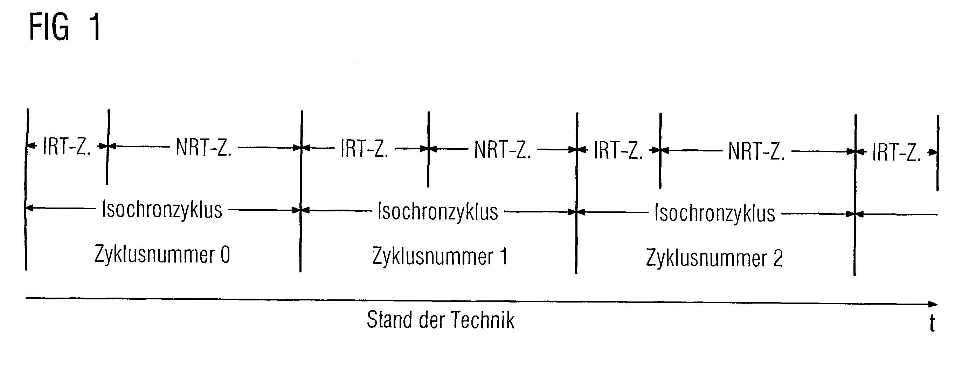

Die Figur 1 zeigt drei aufeinanderfolgende Isochronzyklen bei der Echtzeitkommunikation in einem isochronem Real-Time-Fast-Ethernet (IRTE). Ein entsprechendes Kommunikationssystem ist aus der DE 100 58 524 bekannt. Die Isochronzyklen mit den Zyklusnummern 0, 1 und 2 haben die gleiche Länge. In jedem Isochronzyklus schließt sich an einen IRT-Zeitbereich ein NRT-Zeitbereich an. Die Länge des NRT-Zeitbereichs ist durch die Länge des gesamten Isochronzyklus abzüglich des IRT-Zeitbereichs gegeben.

Übertragungsfehler, die während der Weiterleitung von Datentelegrammen auftreten, können zu ungültigen oder nichtempfangenen Datentelegrammen führen. Die Datentelegramme stehen dann zur Vervollständigung des Peripherieabbilds nicht zur Verfügung. Das Peripherieabbild in einem Knoten ist dann inkonsistent und nicht verwendbar.

Der Erfindung liegt die Aufgabe zu Grunde, ein verbessertes System zur Echtzeitkommunikation, insbesondere dem isochronen Real-Time-Fast-Ethernet, zu schaffen.

Die der Erfindung zu Grunde liegende Aufgabe wird mit einem Verfahren mit den Merkmalen des unabhängigen Patentanspruchs 1 gelöst. Bevorzugte Ausführungsformen sind in den abhängigen Patentansprüchen 2 bis angegeben.

Im erfindungsgemäßen Verfahren werden identische, echtzeitkritische Datentelegramme, die anhand ihrer Kennung erkannt werden können, während der geplanten Echtzeitkommunikation über disjunkte Netzwerkpfade zu einem Knoten gesendet. Zumindest einer der Netzwerkpfade ist also redundant, und das Netzwerk weist zumindest einen geschlossenen Ring auf. Die gesamten zu empfangenden Daten des Peripherieabbilds können dann zweimal oder auch mehrmals von einem Knoten empfangen werden. Wird die Übertragung auf einem Netzwerkpfad gestört, so können gültige Datentelegramme noch immer auf einem alternativen Netzwerkpfad empfangen werden.

Das Kommunikationssystem wird dadurch störungs- und betriebssicher. Es kann vorteilhaft in Automatisierungssystemen, insbesondere bei Verpackungsmaschinen, Pressen, Kunststoffspritzmaschinen, Textilmaschinen, Druckmaschinen, Werkzeugmaschinen, Robotern, Handlingsystemen, Holzverarbeitungsmaschinen, Glasverarbeitungsmaschinen, Keramikverarbeitungsmaschinen sowie Hebezeugen eingesetzt bzw. verwendet werden.

Beim Empfang eines ersten echtzeitkritischen Datentelegramms, bei einem Knoten mit einer Anwendung zu einem Timer-Wert, werden dessen Nutzdaten in dem, der Kennung zugeordneten Adressbereich eines Speichers abgespeichert. Daraufhin wird ein zweites, echtzeitkritisches Datentelegramm mit der Kennung des ersten Datentelegramms an einem zweiten Empfangsport des Knotens empfangen. Der erste und zweite Empfangsport können hierbei auch identisch sein.

In einer Weitergestaltung der Erfindung wird als Timer-Wert die Zyklusnummer des Zyklus verwendet, zu dem ein Datentelegramm empfangen wird.

In einer bevorzugten Ausführungsform der Erfindung werden die Nutzdaten und der gespeicherte Timer-Wert des ersten Datentelegramms mit den Nutzdaten und dem Timer-Wert des zweiten Datentelegramms überschrieben, falls erster und zweiter Timer-Wert nicht identisch sind.

In einer weiteren, bevorzugten Ausführungsform der Erfindung werden die Nutzdaten und der Timer-Wert des ersten Datentelegramms nur dann überschrieben, wenn das zweite Datentelegramm gültig ist.

In einer besonderen Ausführungsform der Erfindung kann das erste Datentelegramm ungültig sein. Die Nutzdaten und der Timer-Wert eines ersten, ungültigen Datentelegramms sollen mit den Nutzdaten und dem zweiten Timer-Wert eines zweiten, gültigen Datentelegramms auch dann überschrieben werden, wenn beide Datentelegramme identische Timer-Werte haben.

Im Folgenden werden bevorzugte Ausführungsformen der Erfindung mit Bezugnahme auf die Zeichnung näher erläutert. Es zeigen:
- Figur 1: ein Zeitdiagramm der Echtzeitkommunikation in einem IRTE,
- Figur 2: ein Organisationsdiagramm eines Datennetzes zur Echtzeitkommunikation mit redundanten Netzwerkpfaden,
- Figur 3: ein Blockdiagramm eines erfindungsgemäßen Knoten,
- Figur 4: ein Flussdiagramm eines erfindungsgemäßen Verfahrens zum Empfang von Datentelegrammen.

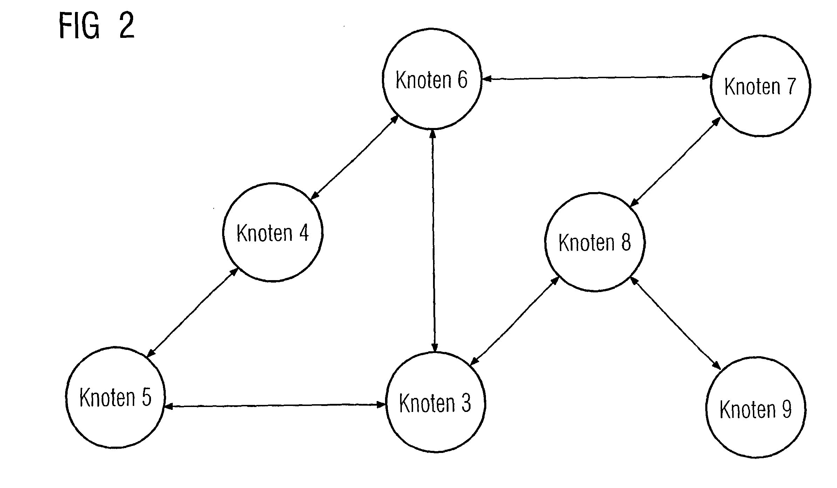

Figur 2 zeigt ein Datennetz zur Echtzeitkommunikation mit redundanten Netzwerkpfaden. Der Knoten 3 kann beispielsweise Datentelegramme vom Knoten 4 über den Knoten 5, über den Knoten 6 oder über die Knoten 6, 7 und 8 empfangen. Zwei dieser Netzwerkpfade sind also redundant. Die redundanten Netzwerkpfade sind im Datennetz integriert, um das erfindungsgemäße Verfahren zum Empfang von Datentelegrammen zu ermöglichen. Vorzugsweise werden durch die redundanten Netzwerkpfade gebildete Ringe für den NRT-Teil eines Zyklus mit Hilfe des Spanning-Tree Algorithmus aufgebrochen, damit keine kreisenden Datentelegramme auftreten.

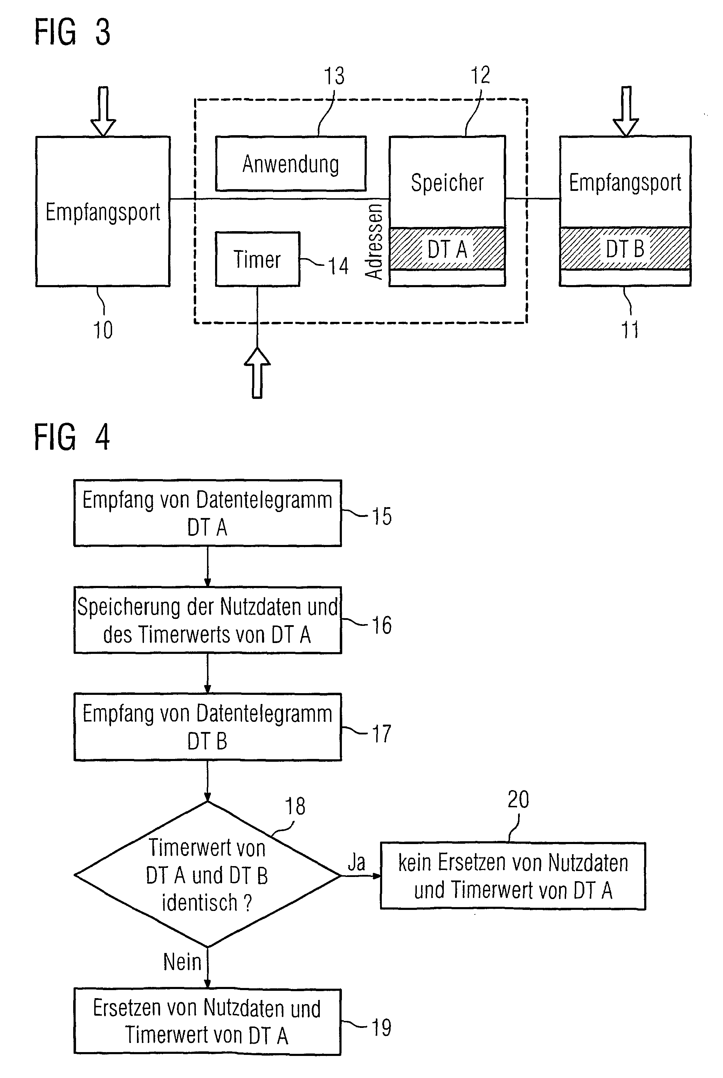

Figur 3 zeigt einen erfindungsgemäßen Knoten. Der erfindungsgemäße Knoten hat die Empfangsports 10 und 11. Die Nutzdaten des Datentelegramms DT A, welches zuvor am Empfangsport 10 empfangen wurde, sind in einem bestimmten Adressbereich des Speichers 12 gespeichert. Der Adressbereich ist durch die Kennung des Datentelegramms DT A bestimmt, bzw. der Kennung ist ein solcher Adressbereich zugeordnet. Die Anwendung 13 des Knotens kann auf die Daten im Speicher 12 zugreifen. Der Knoten weist den Timer 14 auf, welcher mit den Timern weiterer Knoten des Datennetzes synchronisiert ist. Über den Empfangsport 11 wurde ein weiteres Datentelegramm DT B empfangen, welches die gleiche Kennung besitzt wie das Datentelegramm DT A.

Die Arbeitsweise des erfindungsgemäßen Knotens ist in dem Flussdiagramm aus Figur 4 erläutert.

Zunächst wird das gültige Datentelegramm DT A empfangen (Schritt 15). Dessen Nutzdaten und dessen zugeordneter Timer-Wert werden daraufhin gespeichert (Schritt 16).

Dann wird ein weiteres, gültiges Datentelegramm DT B empfangen (Schritt 17).

Sind die, den Datentelegrammen DT A und DT B zugeordneten Timer-Werte nicht identisch (Schritt 18), werden die Nutzdaten des Datentelegramms DT A und der dem Datentelegram DT A zugeordnete Timer-Wert ersetzt (Schritt 19).

Der Timerwert wird vorzugsweise durch einen Zykluszähler gebildet, d.h. der Timerwert ist gleich der aktuellen Zyklusnummer. Der Schritt 19 wird dann ausgeführt, wenn das Datentelegramm DT A in dem aktuellen Zyklus nicht empfangen worden ist, da eine Störung auf dem entsprechenden Übertragungspfad aufgetreten ist. Wenn das Datentelegramm DT B empfangen wird, stehen noch die Nutzdaten aus dem vorherigen Zyklus in dem Speicher, die dann durch die aktuellen Nutzdaten ersetzt werden.

Sind die Timer-Werte der Datentelegramme DT A und DT B identisch, so ist es nicht notwendig die Nutzdaten des Datentelegramms DT A durch die des Datentelegramms DT B zu ersetzen (Schritt 20).
Zusammengefasst betrifft die Erfindung ein Verfahren zum Empfang von Datentelegrammen in Kommunikationssystemen mit redundanten Netzwerkpfaden. Die Empfangsdaten des Peripherieabbilds werden zu einem Knoten auf mindestens zwei unterschiedlichen Netzwerkpfaden geleitet. Dadurch kann in einem Speicher (13) des Knotens selbst dann ein konsistentes Peripherieabbild gespeichert werden, wenn die Datenübertragung auf einem Netzwerkpfad gestört ist.

## Patentansprüche

1. Verfahren zum Empfang von, durch Kennungen **gekennzeichneten** Datentelegrammen in einem isochronen Real-Time-Fast-Ethernet zur Echtzeitkommunikation,
wobei ein Knoten mindestens einen ersten (10) und einen zweiten (11) Empfangsport aufweist, und wobei das Datennetz zumindest einen redundanten Netzwerkpfad aufweist, mit folgenden Schritten:
- Empfang (15) eines ersten Datentelegramms mit einer Kennung an dem ersten Empfangsport zu einem ersten Timer-Wert;
- Speicherung (16) der Nutzdaten des ersten Datentelegramms im der Kennung zugeordneten Adressbereich in einem Speicher des Knotens und Speicherung des ersten Timer-Werts;
- Empfang (17) eines zweiten Datentelegramms mit der Kennung des ersten Datentelegramms an dem zweiten Empfangsport zu einem zweiten Timer-Wert,
- für den Fall, dass der erste und zweite Timer-Wert nicht identisch sind: Überschreiben (18) des, der Kennung zugeordneten Adressbereichs und des gespeicherten Timer-Werts von dem ersten Datentelegramm mit den Nutzdaten und dem zweiten Timer-Wert des zweiten Datentelegramms,
wobei der Timer-Wert, zu dem ein Datentelegramm empfangen wird, der Zyklusnummer des Isochronzyklus entspricht, während dessen ein Datentelegramm empfangen wird

2. Verfahren nach Anspruch 1 mit dem folgenden, weiteren Schritt für den Fall, dass der erste und zweite Timer-Wert identisch sind, die Nutzdaten des ersten Datentelegramms nicht gültig und die Nutzdaten des zweiten Datentelegramms gültig sind: Überschreiben (19) des, der Kennung zugeordneten Adressbereichs mit den Nutzdaten des zweiten Datentelegramms.

3. Verfahren nach Anspruch 1 oder 2, wobei der Adressbereich, welcher Datentelegrammen mit einer Kennung zugeordnet ist, nur dann mit den Nutzdaten eines Datentelegramms beschrieben wird, falls das Datentelegramm mit der Kennung gültig ist.

4. Verfahren nach einem der Ansprüche 1 bis 3, wobei zusätzlich zu den echtzeitkritischen Daten auch nichtechtzeitkritische Daten empfangen werden können.

5. Verfahren nach einem der Ansprüche 1 bis 4, wobei nur die Nutzdaten von gültigen Datentelegrammen in dem der Kennung zugeordneten Adressbereich im Speicher (12) eines Knotens gespeichert werden.

6. Knoten mit einer Anwendung (13) in einem isochronen Real-Time-Fast-Ethernet zur Echtzeitkommunikation mit mindestens einem redundanten Netzwerkpfad und:
- Mitteln (10) zum Empfang eines ersten Datentelegramms mit einer Kennung an dem ersten Empfangsport zu einem ersten Timer-Wert;
- Mitteln (12) zur Speicherung der Nutzdaten des ersten Datentelegramms im, der Kennung zugeordneten Adressbereich in einem Speicher des Knotens und zur Speicherung des ersten Timer-Werts;
- Mitteln (11) zum Empfang eines zweiten Datentelegramms mit der Kennung des ersten Datentelegramms an dem zweiten Empfangsport zu einem zweiten Timer-Wert,
- mit Mitteln zum Überschreiben des, der Kennung zugeordneten Adressbereichs und des gespeicherten Timer-Werts von dem ersten Datentelegramm mit den Nutzdaten und dem zweiten Timer-Wert des zweiten Datentelegramms, für den Fall, dass der erste und zweite Timer-Wert nicht identisch sind,
wobei der Timer-Wert, zu dem ein Datentelegramm empfangen wird, der Zyklusnummer des Isochronzyklus entspricht, währenddessen ein Datentelegramm empfangen wird.

7. Isochrones Real-Time-Fast-Ethernet zur Echtzeitkommunikation mit mindestens einem redundanten Netzwerkpfad und mehreren Knoten, wobei mindestens ein Knoten mit Anwendung (13) folgende Mittel aufweist:
- Mittel (10) zum Empfang eines ersten Datentelegramms mit einer Kennung an dem ersten Empfangsport zu einem ersten Timer-Wert;
- Mittel (12) zur Speicherung der Nutzdaten des ersten Datentelegramms im, der Kennung zugeordneten Adressbereich in einem Speicher des Knotens und zur Speicherung des ersten Timer-Werts;
- Mittel (11) zum Empfang eines zweiten Datentelegramms mit der Kennung des ersten Datentelegramms an dem zweiten Empfangsport zu einem zweiten Timer-Wert,
- Mittel zum Überschreiben des, der Kennung zugeordneten Adressbereichs und des gespeicherten Timer-Werts von dem ersten Datentelegramm mit den Nutzdaten und dem zweiten Timer-Wert des zweiten Datentelegramms aufweist, für den Fall, dass der erste und zweite Timer-Wert nicht identisch sind,
wobei der Timer-Wert, zu dem ein Datentelegramm empfangen wird, der Zyklusnummer des Isochronzyklus entspricht, währenddessen ein Datentelegramm empfangen wird.

8. Computerprogrammprodukt für einen Knoten in einem isochronen Real-Time-Fast-Ethernet zur Echtzeitkommunikation mittels, durch Kennungen **gekennzeichneter** Datentelegramme mit folgenden Schritten:
- Empfang (15) eines ersten Datentelegramms mit einer Kennung an dem ersten Empfangsport zu einem ersten Timer-Wert;
- Speicherung (16) der Nutzdaten des ersten Datentelegramms im, der Kennung zugeordneten Adressbereich in einem Speicher des Knotens und Speicherung (16) des ersten Timer-Werts;
- Empfang (17) eines zweiten Datentelegramms mit der Kennung des ersten Datentelegramms an dem zweiten Empfangsport zu einem zweiten Timer-Wert,
- für den Fall, dass der erste und zweite Timer-Wert nicht identisch sind: Überschreiben (18) des, der Kennung zugeordneten Adressbereichs und des gespeicherten Timer-Werts von dem ersten Datentelegramm mit den Nutzdaten und dem zweiten Timer-Wert des zweiten Datentelegramms,
wobei der Timer-Wert, zu dem ein Datentelegramm empfangen wird, der Zyklusnummer des Isochronzyklus entspricht, währenddessen ein Datentelegramm empfangen wird.

## Claims

1. Method for the receipt of data telegrams, which are identified by identifiers, in an isochronous real-time fast Ethernet, IRTE, for real-time communication, in which a node has at least a first (10) and a second (11) receiving port, and in which the data network has at least one redundant network path, having the following steps:
- receive (15) at the first receiving port a first data telegram with an identifier, at a first timer value,
- store (16) the user data from the first data telegram in the address space assigned to the identifier in a memory in the node, and store the first timer value,
- receive (17) at the second receiving port a second data telegram, having the identifier of the first data telegram, at a second timer value,
- in the event that the first and second timer values are not identical: overwrite (18) the address space, assigned to the identifier, and the timer value stored from the first data telegram, with the user data and the second timer value from the second data telegram,
whereby the timer value at which a data telegram is received corresponds to the cycle number of the isochronous cycle during which the data telegram is received.

2. Method in accordance with Claim 1 with the following additional step for the case when the first and second timer values are identical, the user data from the first data telegram is invalid and the user data from the second data telegram is valid: overwrite (19) the address space assigned to the identifier with the user data from the second data telegram.

3. Method in accordance with Claim 1 or 2, in which the address space which is assigned to data telegrams with an identifier is only overwritten with the user data from a data telegram if the data telegram with the identifier is valid.

4. Method in accordance with one of Claims 1 to 3, in which not only can the real-time-critical data be received, but so also can non-real-time-critical data.

5. Method in accordance with one of Claims 1 to 4, in which only the user data from valid data telegrams is stored in the address space which is assigned in the memory (12) to the identifier.

6. Node with an application (13) in an isochronous real-time fast Ethernet, IRTE, for real-time communication, having at least one redundant network path and:
- facilities (10) for receiving at the first receiving port a first data telegram with an identifier, at a first timer value,
- facilities (12) for storing the user data from the first data telegram in the address space assigned to the identifier in a memory in the node, and for storing the first timer value,
- facilities (11) for receiving at the second receiving port a second data telegram, having the identifier of the first data telegram, at a second timer value,
- with facilities for overwriting the address space, assigned to the identifier, and the stored timer value from the first data telegram with the user data and the second timer value from the second data telegram in the event that the first and second timer values are not identical,
whereby the timer value at which a data telegram is received corresponds to the cycle number of the isochronous cycle during which the data telegram is received.

7. Isochronous real-time fast Ethernet for real-time communication, having at least one redundant network path and several nodes, of which at least one node with an application (13) has the following facilities:
- facilities (10) for receiving at the first receiving port a first data telegram with an identifier, at a first timer value,
- facilities (12) for storing the user data from the first data telegram in the address space assigned to the identifier in a memory in the node, and for storing the first timer value,
- facilities (11) for receiving at the second receiving port a second data telegram having the identifier of the first data telegram, at a second timer value,
- having facilities for overwriting the address space, assigned to the identifier, and the stored timer value from the first data telegram with the user data and the second timer value from the second data telegram in the event that the first and second timer values are not identical,
whereby the timer value at which a data telegram is received corresponds to the cycle number of the isochronous cycle during which the data telegram is received.

8. Computer program product for a node in an isochronous real-time fast Ethernet, IRTE, for real-time communication using data telegrams identified by identifiers, having the following steps:
- receive (15) at the first receiving port a first data telegram with an identifier, at a first timer value,
- store (16) the user data from the first data telegram in the address space assigned to the identifier in a memory in the node, and store (16) the first timer value,
- receive (17) at the second receiving port a second data telegram, having the identifier of the first data telegram, at a second timer value,
- in the event that the first and second timer values are not identical: overwrite (18) the address space, assigned to the identifier, and the timer value stored from the first data telegram with the user data and the second timer value from the second data telegram,
whereby the timer value at which a data telegram is received corresponds to the cycle number of the isochronous cycle during which the data telegram is received.

## Revendications

1. Procédé pour la réception de télégrammes de données **caractérisé par** des identificateurs dans un Real-Time-Fast-Ethernet isochrone, IRTE, pour la communication en temps réel, un noeud comportant au moins un premier port récepteur (10) et un deuxième port récepteur (11) et le réseau de données comportant au moins une voie de réseau redondante, avec les étapes suivantes :
- réception (15) d'un premier télégramme de données muni d'un identificateur sur le premier port récepteur à une première valeur de temporisateur ;
- mémorisation (16) des données utiles du premier télégramme de données dans la zone d'adresse a ssociée à l'identificateur dans u ne mémoire du noeud et mémorisation de la première valeur de temporisateur ;
- réception (17) d'un deuxième télégramme de données muni de l'identificateur du premier télégramme de données au deuxième port récepteur à une deuxième valeur de temporisateur ;
- si la première et la deuxième valeur de temporisateur ne sont pas identiques : recouvrement (18) de la zone d'adresse associée à l'identificateur et de la valeur de temporisateur mémorisée du premier télégramme de données par l'écriture des données utiles et de la deuxième valeur de temporisateur du deuxième télégramme de données ;
la valeur de temporisateur à laquelle un télégramme de données est reçu correspondant au numéro du cycle isochrone pendant lequel un télégramme de données est reçu.

2. Procédé selon la revendication 1, avec l'autre étape suivante : si la première et la deuxième valeur de temporisateur sont identiques, si les données utiles du premier télégramme de données ne sont pas valides et si les données utiles du deuxième télégramme de données sont valides : recouvrement (19) de la zone d'adresse associée à l'identificateur par l'écriture des données utiles du deuxième télégramme de données.

3. Procédé selon la revendication 1 ou 2, dans lequel la zone d'adresse qui est associée à des télégrammes de données munis d'un identificateur n'est écrite avec les données utiles d'un télégramme de données que si le télégramme de données muni de l'identificateur est valide.

4. Procédé selon l'une des revendications 1 à 3, dans lequel, en plus des données critiques à temps réel, des données qui ne sont pas critiques à temps réel peuvent aussi être reçues.

5. Procédé selon l'une des revendications 1 à 4, dans lequel seules les données utiles de télégrammes de données valides sont mémorisées dans la zone d'adresse associée à l'identificateur dans la mémoire (12) d'un noeud.

6. Noeud avec une application (13) dans un Real-Time-Fast-Ethernet isochrone, IRTE, pour la communication en temps réel avec au moins une voie de réseau redondante et :
- des moyens (10) pour la réception d'un premier télégramme de données m uni d'un i dentificateur s ur le p remier p ort r écepteur à une première valeur de temporisateur ;
- des moyens (12) pour la mémorisation des données utiles du premier télégramme de données dans la zone d'adresse associée à l'identificateur dans une mémoire du noeud et pour la mémorisation de la première valeur de temporisateur ;
- des moyens (11) pour la réception d'un deuxième télégramme de données muni de l'identificateur du premier télégramme de données au deuxième port récepteur à une deuxième valeur de temporisateur ;
- des moyens pour le recouvrement de la zone d'adresse associée à l'identificateur et de la valeur de temporisateur mémorisée du premier télégramme de données par l'écriture des données utiles et de la deuxième valeur de temporisateur du deuxième télégramme de données si la première et la deuxième valeur de temporisateur ne sont pas identiques ;
la valeur de temporisateur à laquelle un télégramme de données est reçu correspondant au numéro du cycle isochrone pendant lequel un télégramme de données est reçu.

7. Real-Time-Fast-Ethernet isochrone
pour la communication en temps réel avec au moins une voie de réseau redondante et plusieurs noeuds, au moins un noeud avec application (13) comportant les moyens suivants :
- des moyens (10) pour la réception d'un premier télégramme de données m uni d'un identificateur sur le premier port récepteur à une première valeur de temporisateur ;
- des moyens (12) pour la mémorisation des données utiles du premier télégramme de données dans la zone d'adresse associée à l'identificateur dans une mémoire du noeud et pour la mémorisation de la première valeur de temporisateur ;
- des moyens (11) pour la réception d'un deuxième télégramme de données muni de l'identificateur du premier télégramme de données au deuxième port récepteur à une deuxième valeur de temporisateur ;
- des moyens pour le recouvrement de la zone d'adresse associée à l'identificateur et de la valeur de temporisateur mémorisée du premier télégramme de données par l'écriture des données utiles et de la deuxième valeur de temporisateur du deuxième télégramme de données si la première et la deuxième valeur de temporisateur ne sont pas identiques ;
la valeur de temporisateur à laquelle un télégramme de données est reçu correspondant au numéro du cycle isochrone pendant lequel un télégramme de données est reçu.

8. Programme informatique pour un noeud dans un Real-Time-Fast-Ethernet isochrone, IRTE, pour la communication en temps réel au moyen de télégrammes de données **caractérisés par** des identificateurs avec les étapes suivantes :
- réception (15) d'un premier télégramme de données muni d'un identificateur sur le premier port récepteur à une première valeur de temporisateur ;
- mémorisation (16) des données utiles du premier télégramme de données dans la z one d'adresse a ssociée à l'identificateur d ans u ne mémoire du noeud et mémorisation (16) de la première valeur de temporisateur ;
- réception (17) d'un deuxième télégramme de données muni de l'identificateur du premier télégramme de données au deuxième port récepteur à une deuxième valeur de temporisateur ;
- si la première et la deuxième valeur de temporisateur ne sont pas identiques : recouvrement (18) de la zone d'adresse associée à l'identificateur et de la valeur de temporisateur mémorisée du premier télégramme de données par l'écriture des données utiles et de la deuxième valeur de temporisateur du deuxième télégramme de données ;
la valeur de temporisateur à laquelle un télégramme de données est reçu correspondant au numéro du cycle isochrone pendant lequel un télégramme de données est reçu.
